**Europäisches Patentamt**

**European Patent Office**

**Office européen des brevets**

(19)

(11) Veröffentlichungsnummer : **0 412 339 B1**

(12)

# EUROPÄISCHE PATENTSCHRIFT

(45) Veröffentlichungstag der Patentschrift :
**02.12.92 Patentblatt 92/49**

(51) Int. Cl.$^5$ : **F16B 7/04**

(21) Anmeldenummer : **90113923.8**

(22) Anmeldetag : **20.07.90**

(54) **Gestell mit einem Profilstangen kuppelnden Verbinder.**

(30) Priorität : **11.08.89 DE 3926598**
**18.01.90 DE 4001317**
**18.04.90 DE 4012332**

(43) Veröffentlichungstag der Anmeldung :
**13.02.91 Patentblatt 91/07**

(45) Bekanntmachung des Hinweises auf die
Patenterteilung :
**02.12.92 Patentblatt 92/49**

(84) Benannte Vertragsstaaten :
**AT BE CH DE ES FR GB IT LI LU NL SE**

(56) Entgegenhaltungen :
**EP-A- 0 238 848**

(56) Entgegenhaltungen :
**EP-A- 0 254 287**
**EP-A- 0 254 288**
**DE-A- 3 343 102**
**GB-A- 2 119 054**

(73) Patentinhaber : **Gerd und Bernd Vieler KG.**
**Breslauer Strasse 34**
**W-5860 Iserlohn (DE)**

(72) Erfinder : **Vieler, Gerd**
**Friedensstr.58**
**5860 Iserlohn (DE)**

(74) Vertreter : **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

**Beschreibung**

Die Erfindung richtet sich auf ein Gestell der im Oberbegriff des Anspruches 1 angegebenen Art. Es geht darum, Profilstangen durch einen Verbinder zu einem Gestell zeitweise miteinander zu verbinden und bedarfsweise wieder zu zerlegen. Der Verbinder besteht aus einem Gehäuse mit einem darin längsverschieblichen plattenförmigen Halteglied, einem das Halteglied durchquerenden, im Gehäuse drehgelagerten Exzenterbolzen und einem Federelement, das Bestandteil des Halteglieds sein kann. Der Verbinder befindet sich im Hohlraum der einen Profilstange, aus deren Stirnfläche ein am Außenende seines Halteglieds befindlicher Kupplungshaken herausragt, während der Exzenterbolzen durch eine Querbohrung in der Wand der Profilstange von außen zu seiner Drehbetätigung zugänglich ist. Am inneren Plattenstück des Halteglieds befindet sich ein vorderer und hinterer Steuervorsprung, zwischen denen eine am Exzenterbolzen befindliche Exzenterscheibe gelagert ist, die beim Drehen das Halteglied mit dessen Kupplungshaken bezuglich der Nut zwischen einer kupplungslösenden Ausschublage und einer kupplungswirksamen Einschublage überführt. Der hintere Vorsprung im Halteglied ist beim Überführen des Halteglieds in die kupplungswirksame Einschublage wirksam, in welcher der Kupplungshaken die Nutwand der anderen Profilstange hintergreift und gegen jene Profilstange heranzieht, in welcher der Verbinder montiert ist. Je größer die Kraft ist, mit welcher die Exzenterscheibe den hinteren Vorsprung belastet, umso fester werden die beiden Profilstangen gegeneinander gepreßt.

Bei dem bekannten Gestell mit einem solchen Verbinder (DE-C- 31 53 232) wurde der hintere Steuervorsprung durch eine L-förmige Abwinkelung des Schenkelendes erzeugt. Bei hohen Spannkräften konnte sich die Abwinkelung strecken und dadurch das Halteglied von der Exzenterscheibe abspringen. Durch Materialermüdung nach einer Langzeitbelastung oder durch Materialfehler kam es auch zu einem Bruch der Abwinkelung. Dann war der Verbinder unbrauchbar. In jedem Fall war die Funktionssicherheit des Verbinders gefährdet und es ergab sich ein hohes Unfallrisiko, weil ein defekter oder auch nur gefährdeter Verbinder von außen nicht erkannt werden kann.

Der Erfindung liegt die Aufgabe zugrunde, ein preiswertes, schnell zusammenbaubares Gestell der im Oberbegriff des Anspruches 1 genannten Art zu entwickeln, das hohen Belastungen standhält und sich trotz häufiger Kupplung und Lösung der Profilstangen durch eine lange Lebensdauer auszeichnet. Dies wird erfindungsgemäß durch die im Kennzeichen des Anspruches 1 angeführten Maßnahmen erreicht, denen folgende besondere Bedeutung zukommt.

Der hintere Steuervorsprung wird bei der Erfindung durch eine doppellagige Falte am Innenende des Halteglieds erzeugt, die durch ein Rückbiegen des Plattenmaterials um wenigstens 180° erzeugt ist. Die beiden Schenkel der Falte laufen übereinander. Die von der Exzenterscheibe ausgeübte Spannkraft wirkt jetzt in Verlaufsrichtung des umgelegten Faltenschenkels, der als Deckschenkel über dem Plattenmaterial liegt, welches an dieser Stelle den Basisschenkel der Falte erzeugt. Es gibt keine Querkomponente, die bei Spannbelastungen den Deckschenkel wieder aufbiegen könnte. Der Steuervorsprung ist von einer beträchtlichen Materialanhäufung gebildet, nämlich von dem zur Ausbildung des Deckschenkels dienenden Plattenmaterial.

Im einfachsten Fall dient, gemäß Anspruch 2, die Stirnkante des Deckschenkels als Steuervorsprung. Diese Form des Steuervorsprungs am Innenende des Halteglieds läßt sich mit wenig Plattenmaterial besonders preiswert herstellen. Die Stabilität eines solchen Steuervorsprungs läßt sich erhöhen, wenn man das Innenende des Plattenmaterials über die Falte hinaus weiterfaltet und, gemäß Anspruch 3, zu einer ringförmig geschlossenen Schlaufe formt. Die Schlaufe kann einen quer zum Plattenmaterial verlaufenden Endschenkel aufweisen, auch wenn dazu ein höherer Fertigungsaufwand erforderlich ist und es sich nicht immer enge Toleranzen in der Fertigung einhalten lassen. Die Spannkräfte wirken auf den Endschenkel im Schließsinne der ringförmigen Schlaufe, weshalb sich diese bei Spannbelastungen nicht entrollen kann. Dies gilt insbesondere für die Maßnahme nach Anspruch 4 oder 5, denn bei hohen Spannkräften stützt sich der Endschenkel an der Laibungskante des Durchbruchs im Halteglied ab. Es ist dabei sinnvoll, Bemessungen einzuhalten, die in der Beschreibung näher erläutert sind.

Sehr nützlich ist es, den Exzenterbolzen mit seinem in der Querbohrung der Profilstange gelagerten Kopf zum druckknopfartigen Ein- und Ausbau des verbinders zu nutzen, wie in Anspruch 7 vorgeschlagen ist. Vorteilhafte Maßnahmen hierfür erläutern die Ansprüche 8 bis 10. Um eine unerwünschte Demontage auszuschließen, sollte in einer von der Ausschublage abweichenden Drehposition der Exzenterbolzen im Verbinder blockiert sein, wie es Anspruch 11 vorschlägt. Die Ansprüche 12 bis 16 erläutern hierzu verschiedene Maßnahmen, denen eine eigenständige erfinderische Bedeutung zukommt. So kann nach Anspruch 13 ein Fenster im Gehäuse mit der Exzenterscheibe bereits zusammenwirken und dadurch noch während der Drehung ein unerwünschtes Eindrücken des Exzenterbolzens verhindern. Dazu können auch vorteilhaft Segmente nach Anspruch 14 verwendet werden, die neben der Exzenterscheibe am Exzenterbolzen vorgesehen sind. Hervorzuheben ist, daß auch der Endschenkel der beschriebenen Schlaufe eine solche Blockade des Exzenterbolzens mit übernehmen kann, wenn man gemäß Anspruch 17 vorgeht. Die Stirnfläche dieses Endschenkels kann nämlich bereits mit der Rückwand des Gehäuses blockierend zusammenwirken, wie Anspruch 18 erwähnt, und die Freigabelage läßt sich dann durch eine Aussparung in der Gehäuserückwand erzeugen. Durch eine Bemessung dieser Maßnahmen nach Anspruch 19 ist ein Eindrücken des Exzenterbolzens und damit ein Entkuppeln des Verbinders ausgeschlossen, sobald das Halteglied mit seinem Kupplungshaken sich aus seiner entkuppelten Ausschublage wegbewegt. Dadurch ist eine Fehlsteuerung mit Sicherheit ausgeschlossen.

Weitere Maßnahmen und Vorteile der Erfindung ergeben sich aus den Zeichnungen und der nachfolgenden Beschreibung. Die Erfindung richtet sich dabei auf alle daraus entnehmbaren neuen Merkmale und Merkmalskombinationen, auch wenn diese in den Ansprüchen nicht ausdrücklich erwähnt sein sollten. In den Zeichnungen ist die Erfindung in zwei Ausführungsbeispielen dargestellt. Es zeigen:

Fig.1A die geschnittene Seitenansicht durch eine vorbereitete Verbindungsstelle des Gestells mit zwei Abschnitten der beiden zu verbindenden Profilstangen vor ihrer Kupplung, wobei die Schnittführung aus der Schnittlinie IA-IA von Fig. 2A zu entnehmen ist,

Fig.1B einen Detailschnitt durch ein Teilstück des in Fig. 1A verwendeten Verbinders längs der aus Fig. 2B ersichtlichen Schnittlinie IB-IB,

Fig.2A, 2B und 2C die geschnittenen Draufsichten auf die noch nicht gekuppelte Verbindungsstelle mit den aus Fig. 1A ersichtlichen Profilstangen längs der entsprechenden drei Schnittlinien IIA, IIB und IIC von Fig. 1A,

Fig.2D in Vergrößerung ein Teilstück der mit dem Verbinder ausgerüsteten Profilstange in einer der Fig. 2B bzw. 2C entsprechenden Darstellung,

Fig. 3 in einer der Fig. 2B entsprechenden Darstellung die mit dem Verbinder ausgerüstete eine Profilstange, wobei der zur Montage zwischen dem Verbinder und der Profilstange dienende Bolzenkopf eines im Verbinder sitzenden Exzenterbolzens gegen eine Federkraft nach Art eines Druckknopfs eingedrückt ist, um den Verbinder bezüglich der Profilstange zu montieren bzw. zu demontieren,

Fig. 4 in einer der Fig. 2B entsprechenden geschnittenen Draufsicht die Kupplungsstellung der beiden Profilstangen an der Verbindungsstelle,

Fig. 5 in einer der Fig. 1B entsprechenden Darstellung eine Schnittansicht durch ein Detail des Verbinders, wenn die Kupplungsstellung von Fig. 4 vorliegt,

Fig. 6 in einer ebenfalls der Fig. 1B entsprechenden Darstellung ein Teilstück des Verbinders, dessen Exzenterbolzen sich in einer Zwischenposition befindet, nämlich in einer Übergangsphase zwischen Fig. 1A und Fig. 4,

Fig. 7 das Teilstück von Fig. 6 in einer der Fig. 2A entsprechenden Draufsicht,

Fig. 8 in einer zur Fig. 1A entsprechenden Darstellung die geschnittene Seitenansicht durch eine Verbindungsstelle mit einer alternativen Ausbildung des Verbinders, wobei die Schnittführung durch die in Fig. 9 gezeigte Schnittlinie VIII-VIII verdeutlicht ist,

Fig. 9 in einer zur Fig. 2B analogen geschnittenen Draufsicht die Verbindungsstelle von Fig. 8 längs der dortigen Schnittlinie IX-IX,

Fig. 10 in Vergrößerung eine zu Fig. 2D analoge Detailansicht des in Fig. 9 verwendeten Verbinders,

Fig. 11 eine Querschnittansicht durch die mit dem Verbinder ausgerüstete Profilstange längs der Schnittlinie XI-XI von Fig. 9,

Fig. 12 eine zu Fig. 9 entsprechende Draufsicht, welche bei dem Verbinder von Fig. 8 und 9 die vorausgehend im Zusammenhang mit Fig. 3 erläuterten Verhältnisse verdeutlicht, und

Fig. 13 in einer weiteren der Fig. 9 entsprechenden Schnittansicht eine zu Fig. 4 analoge Spannstellung, wo die Kupplung zwischen den beiden zu verbindenden Profilstangen vollzogen ist.

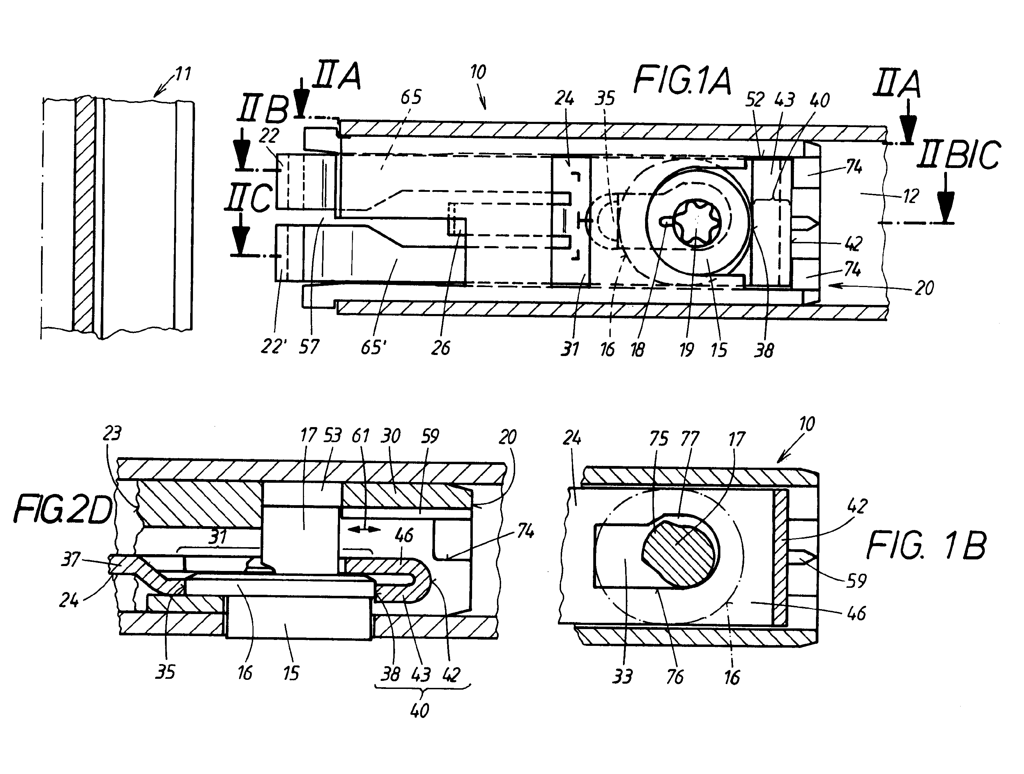

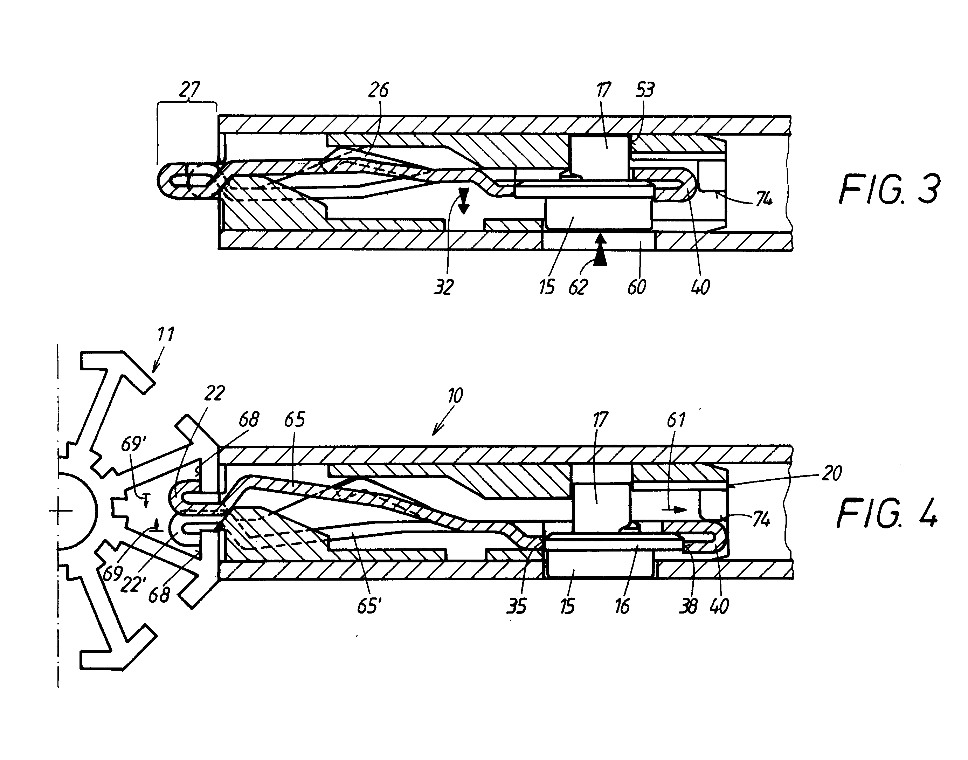

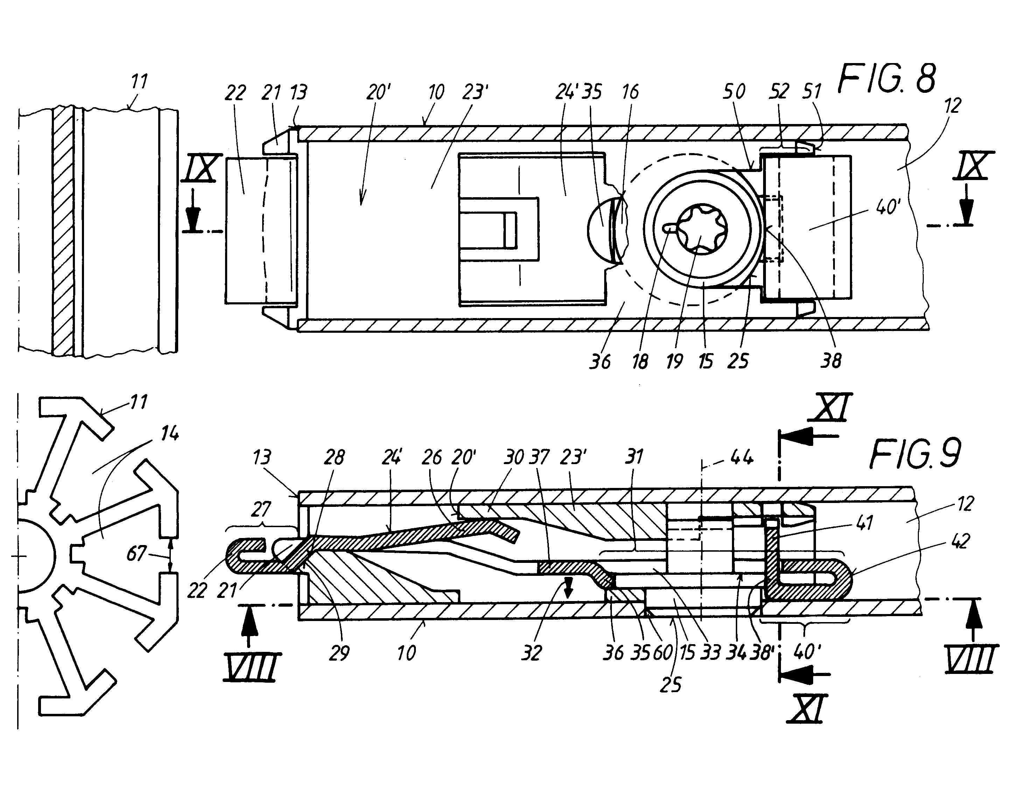

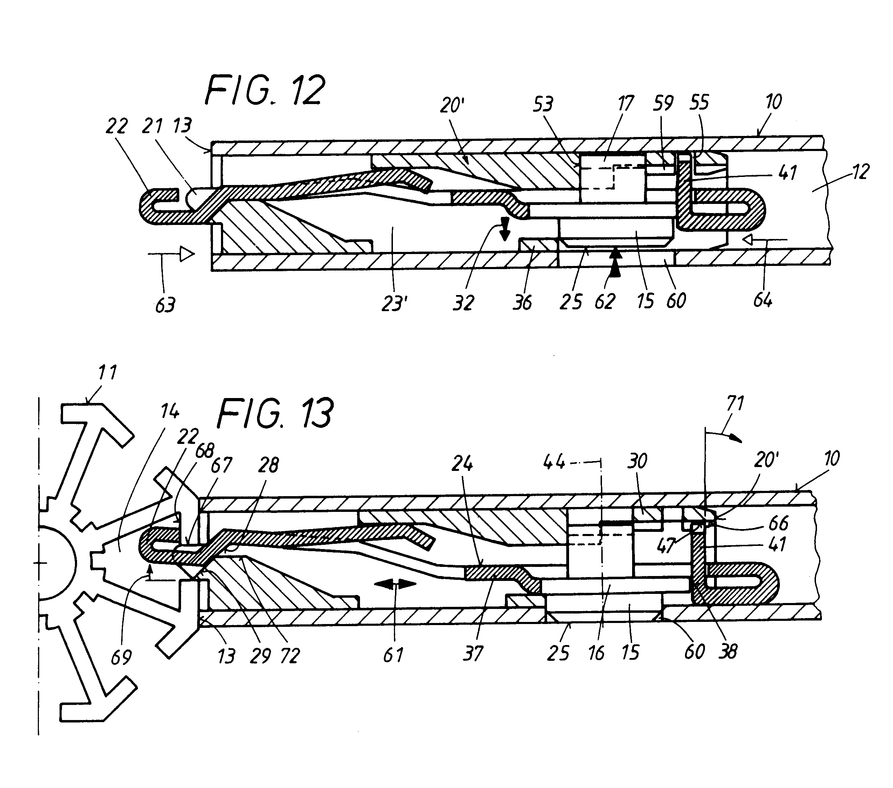

Die beiden zueinander unterschiedlich gestalteten Verbinder 20, 20' sollen zwei Profilstangen 10, 11 zu einem erfindungsgemäßen Gestell lösbar kuppeln. Dazu werden die Verbinder 20, 20' in einem stirnseitig zugänglichen Hohlraum 12 der einen Profilstange 10 eingesteckt und ragen dabei aus der Profilstirnfläche 13 mit Kuppelmitteln 21, 22, 22' heraus. Im Kupplungsfall kommen diese, gemäß Fig. 4 einerseits und Fig. 13 andererseits in einer Nut 14 der anderen Profilstange 11 zu liegen, welche im dargestellten Ausführungsbeispiel aus einer vertikalen achteckigen Säule besteht. Sowohl der Verbinder 20 nach Fig. 1A bis 7 als auch der Verbinder 20' nach Fig. 8 bis 13 sind aus ihren Bestandteilen als Baueinheit vorgefertigt. In den Figuren sind zur Bezeichnung der entsprechenden Bauteile die gleichen Bezugszeichen verwendet, aber zur Unterscheidung der alternativen Ausführung sind diejenigen Bauteile mit einem Strich (') beim Verbinder 20' versehen, die von denjenigen des Verbinders 20 wesentlich abweichen. Die Verbinder 20 bzw. 20' bestehen aus einem Gehäuse 23 bzw. 23' mit einem darin längsbeweglichen Halteglied 24 bzw. 24', einem Exzenterbolzen 25 und einem Federglied, das zwar im vorliegenden Fall als eine mit dem Halteglied 24 bzw. 24' einstückige Federzunge 26 ausgebildet ist, bedarfsweise aber davon getrennt hergestellt sein könnte, z. B. als eine einen Lagerzapfen 17 des Exzenterbolzens 25 radial umschließende Wendelfeder.

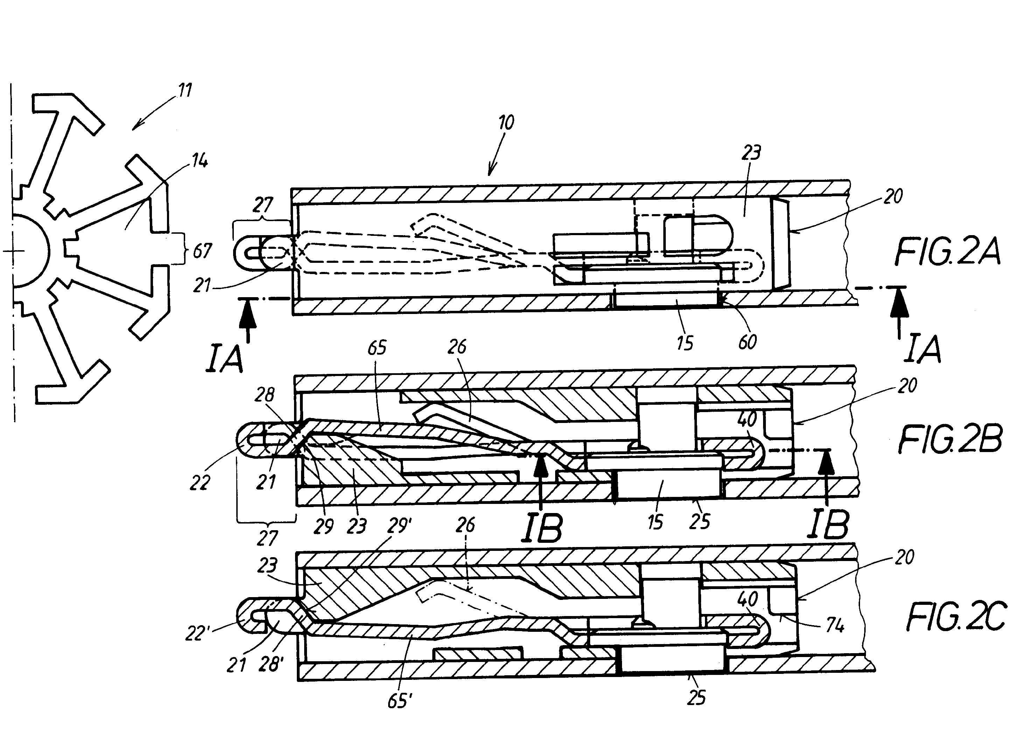

Die Halteglieder 24, 24' bestehen aus längsprofiliertem Plattenmaterial 37 von Federstahl. Am Plattenaußenende 27 sind ein bzw. zwei Kupplungshaken 22, 22′ vorgesehen, die das bereits erwähnte erste Kupplungsmittel bilden und im Montagefall des Verbinders gemäß Fig. 2B bzw. 9 aus der Profil-Stirnfläche 13 herausragen. Das Plattenmaterial 37 ist aber in den beiden Haltegliedern 24, 24′ zueinander unterschiedlich profiliert. Deshalb soll zunächst der einfachste Ausführung des Halteglieds 24′ gemäß dem Verbinder 20′ von Fig. 8 bis 13 beschrieben werden.

Das Plattenaußenende 27 ist zu einem einzelnen Kupplungshaken 22 abgekröpft, dem sich, mit Abstand, eine Schrägfläche 28 anschließt. Im Montagefall liegt die Schrägfläche 28 an einer Gegenfläche 29 im Gehäuse 23′ an, das aus Zinkdruckguß besteht. Im Gegensatz zu dem noch zu beschreibenden Halteglied 24 ist die Federzunge 26 an diesen vorderen Bereich des Halteglieds 24′ angeformt und entsteht durch einen U-förmigen Ausschnitt und eine entsprechend profilierte Verkröpfung, deren Verlauf aus Fig. 9 ersichtlich ist. Das freie Ende der Federzunge 26 stützt sich an einer Gehäuserückwand 30 ab und übt auf den nachfolgenden Plattenabschnitt 31 ein im Sinne des Pfeils 32 wirksame Federbelastung aus. Dieser Plattenabschnitt 31 umfaßt einen Durchbruch 33, der, im Montagefall des Verbinders 20′, vom Exzenterbolzen 25 durchsetzt wird und hier im wesentlichen aus einem Langloch besteht. Beidendig des Durchbruchs 33 befinden sich besondere Steuervorsprünge 35, 38, welche einer Vorderwand 36 des Gehäuses 23′ zugekehrt sind und sich über die Oberseite 34 des dortigen Plattenabschnitts 37. Der vordere Steuervorsprung 35 besteht aus einer aus dem Plattenmaterial 37 herausgedrückten Delle.

Das Halteglied 24 beim Verbinder 20 des ersten Ausführungsbeispiels von Fig. 1A bis 7 hat prinzipiell den gleichen Aufbau, weshalb weitgehend die bisherige Beschreibung auch dort gilt. Es genügt, lediglich auf die Unterschiede einzugehen. Die Platte 24 ist mit einem Längsschlitz 57 versehen, der sie in zwei zueinander unterschiedlich verkröpfte Plattenzungen 65, 65′ gliedert. Der Längsschlitz 57 endet vor dem beschriebenen hinteren gemeinsamen Plattenabschnitt 31. Die Außenenden der beiden Plattenzungen 65, 65′ sind bezüglich einer Längsmittenebene des Gehäuses 23 zueinander′ spiegelbildlich geformt und bilden die bereits erwähnten, zueinander entgegengerichteten Haken 22, 22′, denen sich dann jeweils zueinander spiegelbildliche Schrägflächen 28, 28′ anschließen, wie am besten aus Fig. 2B und 2C hervorgeht. Diesen Schrägflächen 28, 28′ sind im Gehäuse 23′ Gegenflächen 29, 29′ zugeordnet, die ein zueinander spiegelbildliches Profil aufweisen. In der Ausgangslage von Fig. 2A liegen die beiden Haken genau fluchtend übereinander und besitzen daher nur eine Baubreite, wie sie sich auch bei dem Einzelhaken 22 des Halteglieds 24′ gemäß Fig. 9 ergibt. Die beiden Plattenzungen 65, 65′ besitzen einen spiegelbildlichen S-förmigen Verlauf, weshalb sich die beiden Abschnitte 28, 28′ überkreuzen. Im weiteren Verlauf kommt es zu einer Gabelung des Längsschlitzes 57, so daß dazwischen die erwähnte Federzunge 26 entsteht, die aber im Schlitzgrund, also an dem hinteren Plattenabschnitt 31 angeformt ist. Wenn auch mit einer andersartigen Verkröpfung bildet die Federzunge 26 ein drittes, längsverlaufendes Glied zwischen den bereits erwähnten hakenbildenden, zueinander spiegelbildlichen Plattenzungen 65, 65′.

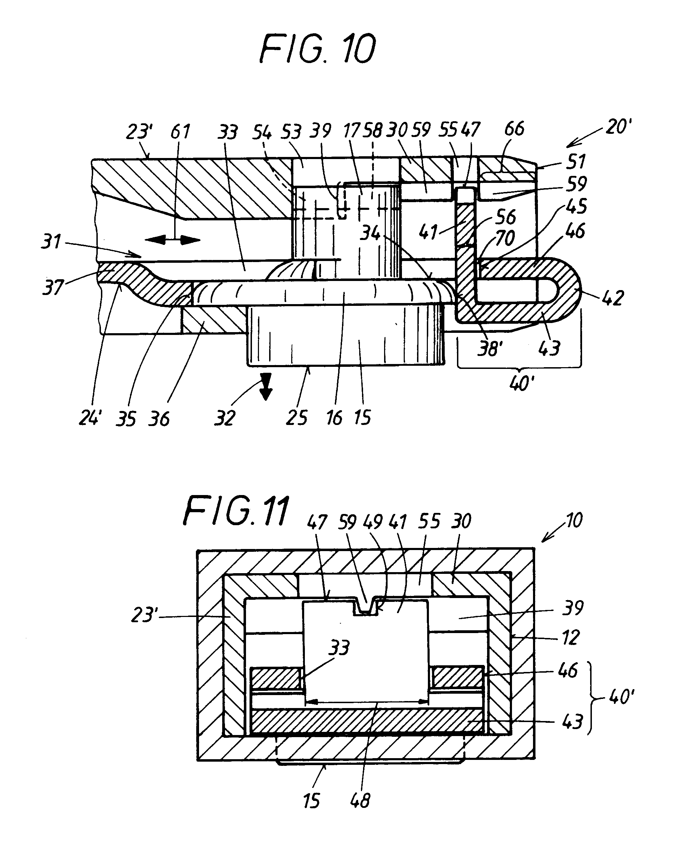

Übereinstimmend besitzt der Exzenterbolzen 25 bei beiden Verbindern 20, 20′ zunächst einen zylindrischen Kopf 15, dessen Stirnfläche mit einer Werkzeugaufnahme 19 für einen Steckschlüssel od. dgl. sowie mit einer Marke 18 versehen ist, welche die jeweilige Drehposition des Bolzens 25 erkennen läßt. Ausweislich Fig. 8 bis 10 ruht der Drehkopf 25 im Montagefall in einem halbkreisförmigen Grund eines Wandausschnitts 50. Der Wandausschnitt 50 geht am Innenende 51 des Gehäuses in eine Erweiterung 52 über, in welche eine noch näher zu beschreibende Falte 40 bzw. Schlaufe 40′ bei der Exzenterbetätigung einfährt. Wie aus Fig. 10 zu erkennen ist, schließt sich an den Drehkopf 15 die eigentliche Exzenterscheibe 16 an, die in flächiger Berührung mit der Vorderseite 34 des hinteren Plattenabschnitts 31 steht. Nach dem Zusammenbau verläuft der Exzenterbolzen 25 mit seiner Drehachse 44, gemäß Fig. 9, senkrecht zur Plattenebene. Der Exzenterbolzen 25 wird durch die vorerwähnte Federbelastung mit seinem Drehkopf 15 aus dem Gehäuse im Sinne des Pfeils 32 von Fig. 10 herausgedrückt, bis die gegenüberliegende Seite der Exzenterscheibe 16 an der Innenfläche der Gehäusevorderwand 36 zur Anlage kommt. Der Exzenterbolzen 25 besitzt, im Anschluß an die Exzenterscheibe 16, einen zylindrischen Lagerzapfen 17, dem in der Gehäuserückwand 30 eine Lagerbohrung 53 zugeordnet ist. Nach Zusammenbau des Verbinders greift der Lagerzapfen 17 nur mit seinem halben Umfang in eine halbkreisförmige Lageraufnahme 54 der Bohrung 53 ein, weil in diesem Bereich die Bodenwand 30 eine stufenförmige Verdickung 39 aufweist. An der gegenberiegenden Seite stützt sich der Lagerzapfen 17 am Stirnende einer Führungsrippe 59 ab, die in der Längsmitte der Gehäuserückwand 30 verläuft. Der Lagerzapfen 17 besitzt eine zum Rippenprofil komplementäre, diametrale Rinne 58, die für einen genauen Zusammenbau des Verbinders 20 bzw. 20′ aus den eingangs erwähnten Bestandteilen wichtig ist.

Der Zusammenbau des Verbinders 20′ erfolgt in folgender Weise: Das Gehäuse 23 ist an seinem Innenende 51 offen, weshalb das plattenförmige Halteglied 24 bzw. 24′ zusammen mit dem durchgesteckten Exzenterbolzen 25 von hinten in das Gehäuse 23 bzw. 23′ eingeführt werden kann. Der Bolzen 25 nimmt dabei eine Drehlage ein, in welcher der Lagerzapfen 17 mit seiner diametralen Rinne 58 auf der Führungsrippe 59 gleiten kann, bis seine mit der Lagerbohrung 53 ausgerichtete Position von Fig. 2D bzw. 10 erreicht ist. Die vorerwähnte stirnseitige Marke 18 des Drehkopfs 15 gemäß Fig. 1A bzw. 8 ist mit dem Verlauf der Rinne 58 ausgerichtet. In dieser Ausgangsposition weist die Exzenterscheibe 16 mit ihrer maximalen Exzentrizität, wie die Marke 18 zeigt, gegen die vordere Steuerkante 35 des Haltegliedes 24 bzw. 24′. Das Halteglied 24 bzw. 24′ ist somit mit seinen Haken 22, 22′ in der am weitesten ausgefahrenen Position, die nachfolgend kurz "Ausschublage" bezeichnet werden soll und in Fig. 8, 9 bzw. 1A bis 3 dargestellt ist.

In dieser Ausschublage ist der bzw. sind die außenendigen Kupplungshaken 22, 22′ maximal ausgefahren und befinden sich in vertikaler Ausrichtung mit zwei breitenmäßig entsprechend bemessenen Kupplungsnasen 21, die einstückig mit dem Gehäuse 23 ausgebildet sind, das Halteglied 24 bzw. 24′ zwischen sich fassen und, in der aus Fig. 1A bis 2C bzw. Fig. 8, 9 ersichtlichen Montagelage des Verbinders 20, 20′ in der Profilstange 10, über die Profil-Stirnfläche 13 herausragen. Diese Kupplungsnasen 21 sind das eingangs erwähnte zweite Kupplungsmittel.

Der Delle 35 gegenüberliegend befindet sich ein Steuervorsprung 38 bzw. 38′, der bei den beiden Haltegliedern 24, 24′ zwar in vergleichbarer, aber zueinander doch unterschiedlicher Weise gestaltet ist. Die einfachste Ausführung zeigt das Halteglied 24 gemäß Fig. 2D. Dort ist das Innenende des Plattenmaterials 37 zurückgebogen, so daß eine Schlaufe 40 entsteht. Durch den nach hinten weisenden Faltenscheitel 42 getrennt, liegt über einem, den vorerwähnten Plattenabschnitt 31 im wesentlichen eben fortsetzenden Basisschenkel 46 ein nach vorne gebogener Deckschenkel 43, der hier parallel zum Basisschenkel 46 verläuft. Die Schlaufe 40 ist so flach gedrückt, daß die dort befindliche Stirnkante 38 des Plattenmaterials 37 bündig mit der Exzenterscheibe 16 liegt und daher dort die Funktion eines hinteren Steuervorsprungs erfüllt.

In der abgewandelten Ausführung der Halteplatte 24′ beim Verbinder 20′ von Fig. 10 liegt prinzipiell zunächst der gleiche Faltungsverlauf vor, bestehend aus Basisschenkel 46, Faltenscheitel 42 und Deckschenkel 43, doch endet dann noch nicht das Plattenmaterial, sondern ist rechtwinklig umgelenkt und in einem Endschenkel 41 weitergeführt. Der Endschenkel 41 durchgreift den Durchbruch 33 im Halteglied 24′, ist auf der gegenüberliegenden Plattenseite sogar fortgeführt und endet mit seiner Stirnfläche 47 in diesem Ausführungsbeispiel erst kurz vor der Innenfläche der Gehäuserückwand 30. Dadurch entsteht eine in sich ringförmig geschlossene Schlaufe 40′. Hier bildet die der Exzenterscheibe 16 zugekehrte Fläche des Endschenkels 41 den aus Fig. 10 ersichtlichen Steuervorsprung 38′. Ausweislich der Fig. 11 besitzt der Endschenkel 41 eine der Weite des Durchbruchs 33 angepaßte Schenkelbreite 48. Der Endschenkel 41 kann, durch einen Spalt 70 getrennt, vor der Laibungskante 45 des Plattendurchbruchs 33 zu liegen kommen und verläuft parallel zur Drehachse 44 des Exzenterbolzens 25. Die Stirnfläche 47 ist dabei mit einem Ausbruch 49 versehen, der eine Bewegung über das vordere Stück der erwähnten bodenseitigen Führungsrippe 59 gestattet. Im zusammengebauten Zustand des Verbinders 20′ kommt die Stirnfläche 47 mit einem Schlitz 55 in der Gehäuserückwand 30 in Ausrichtung. In Längsrichtung des Verbinders 20′ gesehen ist die Schlitzweite annähernd gleich der Plattendicke 56 dieses Endschenkels 41 ausgebildet.

Der als Baueinheit vorgefertigte Verbinder 20′ läßt sich, wie Fig. 12 verdeutlicht, schnell und bequem ein- bzw. ausbauen, was, wie aus Fig. 3 erkennbar ist, auch für den Verbinder 20 gilt. Dazu wird, gegen die Federbelastung 32, ein Druck im Sinne des Pfeils 62 auf den Drehkopf 15 ausgeübt. Dadurch läßt sich dieser druckknopfartig ins Lagergehäuse 23 eindrücken, bis sein Drehkopf 15 nicht mehr über die Gehäusevorderwand 36 herausragt. Sein Lagerzapfen 17 verschiebt sich dabei axial in der Lagerbohrung 53 der Gehäuserückwand 30. Im Falle des Verbinders 40′ taucht dabei, wie Fig. 12 veranschaulicht, auch der Endschenkel 41 in den Gehäuseschlitz 55 ein. Jetzt läßt sich der Verbinder 20′ bzw. 20 im Sinne des Einsteckpfeils 63 von Fig. 12 durch die vordere Stirnöffnung 13 der Profilstange 10 in den Hohlraum 12 einschieben, bis der eingedrückte Drehkopf 15 in Ausrichtung mit einer Querbohrung 60 in die Wand der Profilstange 10 gelangt. In diesem Fall schnappt dann der Drehkopf 15 unter der Wirkung der Federbelastung 32 von selbst in die Querbohrung 60 ein. Es liegt dann eine definierte Einbaulage des Verbinders 20, 20′ der Profilstange 10 vor. Die vorerwähnten Kupplungsnasen 21 und der bzw. die Kupplungshaken 22, 22′ ragen dann im gewünschten Ausmaß über die Profilstirnfläche 13 hinaus. Die Demontage des Verbinders 20 bzw. 20′ erfolgt im umgekehrten Sinn in Richtung desw Herauszieh-Pfeils 64 von Fig. 12.

Zur Verbindung der beiden Profilstangen 10, 11 werden zunächst die aus der Stirnfläche 13 der Stange 10 herausragenden Kupplungsmittel 21, 22 und ggf. 22′ in eine Nut 14 der anderen Profilstange 11 eingesteckt. In beiden Verbindern 40, 40′ besitzen die Kupplungsmittel 21 bis 22′ nur eine Baubreite, die der lichten Weite des Nuteingangs 67 entspricht. Dann wird der Drehbolzen 25 verdreht. Dazu wird ein Drehwerkzeug, wie ein Steckschlüssel, durch die aus Fig. 1A bzw. 8 ersichtliche Werkzeugaufnahme 19 im Drehkopf 15 eingeführt, welcher durch die Querbohrung 60 der Profilstange 10 bequem zugänglich ist. Damit dreht sich die Exzenterscheibe 16 und nimmt durch ihre Exzentrizität über den vorbeschriebenen hinteren Steuervorsprung 38 bzw. 38′ an der Falte 40 bzw. Schlaufe 40′ das Halteglied 24, 24′ mit. Es kommt die durch den Pfeil 61 verdeutlichte Längsbewegung des Haltegliedes 24, 24′ zustande. Der bzw.

die Kupplungshaken 22, 22' verschieben sich aber nicht nur axial im Sinne des Pfeils 61, sondern auch quer dazu, wie durch den Pfeil 69 bzw. 69' in den Fig. 13 bzw. 4 verdeutlicht ist. Dieser seitliche Versatz 69, 69' der Kupplungshaken 22, 22' wird durch die Führungswirkung der Schrägflächen 28 bzw. 28' an den Gegenflächen 29 bzw. 29' des jeweils zugehörigen Gehäuses 23 bzw. 23' herbeigeführt. Die Längsverschiebung 61 wird auch in eine Querbewegung 69, 69' gewandelt. Die Enden der Kupplungshaken 22, 22' werden dadurch hinter die Nutinnenwand 68 gemäß Fig. 13 bzw. 4 geführt und pressen im weiteren Vollzugt der Längsverschiebung 61 die dazwischenliegende Nutwand des Profils 11 gegen die Stirnfläche 13 der sich schauseitig davor abstützenden Profilstange 10. Die Kupplungshaken 22, 22' und die Stirnfläche 13 wirken somit wie Spannbacken, welche die Nutwand zwischen sich einklemmen. Nach einer 180°-Drehung ist schließlich die volle Spannstellung von Fig. 4 bzw. 13 erreicht, wo das Halteglied 24 bzw. 24' maximal eingeschoben worden ist, weshalb diese Position als "Einschublage" bezeichnet werden soll.

Die Schrägflächen 28, 28' brauchten nicht immer als nur zweidimensionale, schräge ebene Rampe ausgebildet zu sein, sondern könnten auch eine dreidimensionale Verdrillung aufweisen, bei welcher aus der erwähnten axialen Längsbewegung 61 eine Torsionsbewegung der endseitigen Kupplungshaken 22, 22' entstehen könnte. Der Bewegungsweg der Kupplungshaken beim Kuppeln spielt keine Rolle, entscheidend ist nur, daß die Haken 22, 22' nicht mehr ausgerichtet mit den gehäusefesten Kupplungsnasen 21 stehen, sondern demgegenüber seitlich versetzt sind und die erwähnte Innenfläche 68 der Nut 14 an der anderen Profilstange 11 hintergreifen. Anstelle einer nur einseitig angeordneten Gegenfläche 29, 29', gegen welche die Schrägflächen 28, 28' von der Federbelastung angedrückt gehalten werden, könnte das Gehäuse 23 bzw. 23' auch einen schmalen Führungsschlitz aufweisen, dessen eine Schlitzkante jeweils die erwähnte Gegenfläche 29, 29' bildet. In voller Einschublage könnte das zwischen dem Kupplungshaken 22, 22' und der Schrägfläche 28, 28' befindliche, aus den Fig. ersichtliche Geradstück auf die in Fig. 13 gezeigte Kuppe 72 hinter der Gegenfläche 29 auflaufen, wodurch die Querstellung des zugehörigen Kupplungshakens 22, 22' in der Spannstellung des Verschlusses 20, 20' gesichert ist.

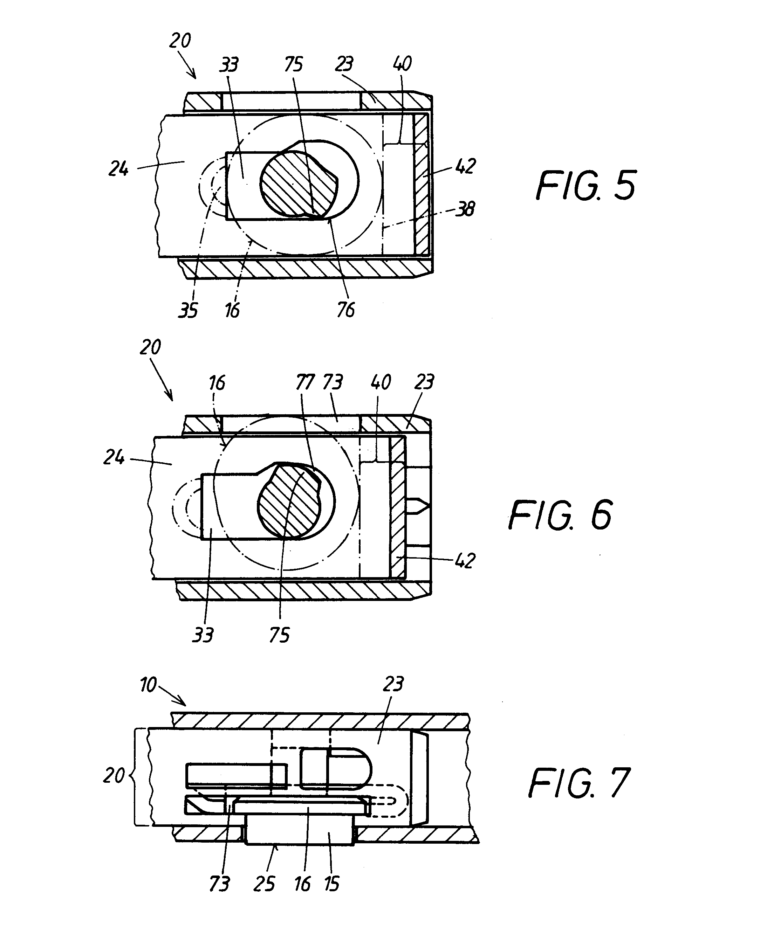

In einer Zwischenstellung, die aus Fig. 6 und 7 ersichtlich ist, gelangt die Exzenterscheibe 16 in ein Fenster 73 in der oberen Seitenwand des Gehäuses 23, wo sie eine axiale Führung erfährt. Dies erfolgt bereits kurz nach dem Verlassen der vollen Ausschublage gemäß Fig. 2A. Dadurch wird die genaue Position der Exzenterscheibe 16 bei der Drehbewegung gesichert. In Unkenntnis des inneren Aufbaus des Verbinders 20 meint eine Bedienungsperson beim Verdrehen des Exzenterbolzens 25 zugleich einen axialen Druck ausüben zu müssen. Dies wird durch den Eingriff der Exzenterscheibe 16 im Fenster 73 des Gehäuses 23 ausgeschlossen. Dadurch bleibt während der ganzen Drehung die ordnungsgemäße Lage der Exzenterscheibe 16 an der Stirnkante 28 bzw. am Endschenkel 41 im rückgefalteten Halteglied 24, 24' erhalten.

Beim Verbinder 20 befinden sich im Inneren des Gehäuses 23 zugleich eine oder mehrere ortsfeste Anschläge 74, die normalerweise, wenn die volle Ausschublage vorliegt, außerhalb des Halteglieds 24 positioniert sind, wie aus den Fig. 1A bis 2D zu entnehmen ist. Dann ist der erwähnte Druckknopfeffekt zur Montage des Verbinders 20 gemäß Fig. 3 möglich. Durch die Drehung des Exzenters vollzieht sich aber ein Einschub 61 des Halteglieds 24, der bereits in der Zwischenposition von Fig. 6 und 7 zu einem Auflauf des Innenendes der Falte 40 auf den ortsfesten Anschlag 73 führt, der damit die Funktion hat, als Auflaufbock für das hintere Ende des Halteglieds 24 zu dienen. Eine solche Ausrichtung des Innenendes vom Halteglied liegt schließlich auch in der Endposition, bei voller Einschublage des Halteglieds 24 gemäß Fig. 4, vor. In all diesen Fällen ist ein Eindrücken 62 des Exzenterbolzens 25 im Sinne der Fig. 3 nicht mehr möglich. Die Eindrückbewegung 62 des Exzenterbolzens 25 ist blockiert. Ein versehentlicher Ausbau des Verbinders 20 durch Eindrücken seines Bolzenkopfs 15 kann nicht mehr stattfinden. Die ordnungsgemäße Verbindung der beiden Profilstangen 10, 11 gemäß Fig. 4 ist nicht mehr gefährdet.

Auch beim Verbinder 20' findet eine solche Blockade statt, doch vollzieht sie sich auf andere Weise. Bei der Drehung des Exzenterbolzens 25 bewegt sich, ausgehend von der in Fig. 10 gezeigten Ausschublage, der Endschenkel 41 mit seiner Stirnfläche 47 zunehmend über ein Endstück 66 der Gehäuserückwand 30. Bereits bei einer geringen Einwärtsbewegung geht, wegen der oben erwähnten Bemessung, die Ausrichtung der Stirnfläche 47 mit dem Schlitz 55 verloren. Ein Verschiebungsweg von nur 0,1 mm bringt bereits eine Blockade. Der ordnungsgemäße Hintergriff der Exzenterscheibe 16 durch den Schlaufenschenkel 41 ist sichergestellt; die Steuerkante 38' kann nicht mehr abspringen. Dies gilt erst recht für die volle Einschublage gemäß Fig. 13. Eine Demontage des Verbinders durch Eindrücken des Bolzenkopfes 15 in der Profil-Querbohrung 60 ist verhindert. Das Bodenendstück 66 bildet einen Anschlag für die Schlaufe 40'. Zur Demontage ist jetzt wieder die in Fig. 12 beschriebene Ausrichtung des Endschenkels 41 mit dem Gehäuseschlitz 55 erforderlich.

Wie bereits im Zusammenhang mit Fig. 10 erläutert wurde, liegt zwischen der Laibungskante 45 des Halteglied-Durchbruchs 33 und dem Endschenkel 41 ein Spalt 70 vor. In der Spannstellung von Fig. 13 nimmt die Exzenterscheibe 16 die vom hintergreifenden Kupplungshaken 22 ausgehende Spannkraft über den Endschenkel 41 auf. Dann kann die durch den dortigen Belastungspfeil 71 verdeutlichte Biegebeanspruchung auf den Schenkel 41 ausgeübt werden, weil zum Aufbau dieses Halteglieds 24, wie bereits erwähnt wurde, Federstahl dient. Die Biegebeanspruchung 71 bestimmt somit die auf den Kupplungshaken 22 einwirkende maximale Spannkraft. Man erhält so eine definierte Spannkraft, die weitgehend konstant gehalten werden kann, unabhängig von den anfallenden Toleranzen der Bauteile im Bereich des Verbinders 20′ und der Profilstange 10. Durch diese Spannungsbegrenzung läßt sich eine unzulässig hohe Belastung vermeiden, die sonst zu einer Beschädigung des Stangenmaterials führen kann, welches in der Regel aus empfindlichem Aluminium besteht. Andererseits, wenn es nicht darauf ankommt, kann man den Spalt 70 so klein bemessen, daß entweder von vorneherein oder spätestens bei Übertragung einer Spannkraft im Falle der Fig. 13 es zu einer Berührung zwischen dem Schlaufenschenkel 41 und der Laibungskante 45 im Durchbruch 33 kommt. Dann wird die Spannkraft sogar über beide Schenkelteile, nämlich nicht nur über den Deckschenkel 43, sondern auch über den Basisschenkel 46 übertragen.

Die vorerwähnte Blockade des Bolzenkopfs 15 gegenüber Eindrückbewegungen 62 könnte auch durch unmittelbar am Exzenterbolzen 25 wirkende Anschläge bewirkt sein, die zwar Eindrückbewegung des Exzenterbolzens 25 in voller Ausschublage ermöglichen, aber in jeder davon abweichenden Position ausschließen. Man könnte ein Segment verwenden, das im Lagerbereich des Exzenterbolzens 25 seine Abstützung in abweichender Drehposition vorfindet, während in voller Ausschublage des Halteglieds 24 das Segment mit einem Ausbruch in der Gehäusewand ausgerichtet ist und daher eine Eindrückbewegung 62 zuläßt. Diese Maßnahmen sind, unabhängig vom vorbeschriebenen Gegenstand von selbständiger erfinderischer Bedeutung. Der Deckschenkel 43 brauchte nicht in jedem Fall parallel zum Basisschenkel 46 verlaufen, sondern könnte in einem Winkel dazu gestellt sein, der bei Belastungen im Schließsinne der Falte 40 wirksam ist. Auch die Form der Kupplungshaken 22, 22′ könnte anders gewählt sein, z. B. in Form eines Hammerkopfes.

Die Drehposition des Exzenterbolzens 25 bei voller Einschublage des Halteglieds 24 ist beim Verbinder 40 ausweislich der Fig. 5 dadurch begrenzt, daß, nach einer 180°-Drehung, ein radiales Segment 75 am Exzenterbolzen an die Umrißkante 76 des bereits mehrfach erwähnten Durchbruchs 33 im Halteglied anstößt. Auf der gegenüberliegenden Seite des Durchbruchs ist ein Ausschnittprofil vorgesehen, welches die freie Drehung des Segments 75 bis zur vollen Ausschublage von Fig. 1B des Halteglieds 24 ermöglicht, unter Einschluß der Zwischenposition gemäß Fig. 6 und 7.

**Patentansprüche**

1. Gestell aus lösbar durch einen Verbinder (20, 20′) miteinander kuppelbaren Profilstangen (10, 10′), von denen wenigstens einige (11) hinterschnittene Nuten (14) und andere (10) einen stirnseitigen Hohlraum (12) zur Aufnahme des Verbinders (20, 20′) aufweisen,

der Verbinder (20, 20′) aus einem im Hohlraum (12) steckenden Gehäuse (23, 23′), aus wenigstens einem darin längsverschieblichen (61), aus Plattenmaterial (37) gebildeten Halteglied (24, 24′) sowie aus einem im Gehäuse (23, 23′) drehgelagerten Exzenterbolzen (25) besteht, der das Halteglied (24, 24′) durchquert sowie eine Exzenterscheibe (16) besitzt,

das Halteglied (24, 24′) an seinem Außenende (27) mindestens einen Kupplungshaken (22, 22′) aufweist, der bei montiertem Verbinder (20, 20′) aus der Profilstange (10) herausragt und zum Kuppeln in die Nut (14) einer anderen Profilstange (11) einsteckbar ist und im Kupplungsfall deren Nutwand (68) hintergreift,

und die Exzenterscheibe (16) zwischen einem vorderen (35) und hinteren Steuervorsprung (38, 38′) an einem Plattenabschnit (31) des Halteglieds (24, 24′) angeordnet ist und, beim Drehen des Exzenterbolzens (25), das Halteglied (24, 24′) mit dessen Kupplungshaken (22, 22′) bezüglich der Nut (14) zwischen einer kupplungslösenden Ausschublage und einer kupplungswirksamen Einschublage überführt,

**dadurch gekennzeichnet,**
daß das Plattenmaterial (37) am Innenende des Halteglieds (24, 24′) zu einer gegen den Kupplungshaken (22, 22′) rückgebogenen, doppellagigen (43, 46) Falte (40, 40′) umgelegt ist, die den hinteren Steuervorsprung (38, 38′) für die Exzenterscheibe (16) bildet.

2. Gestell nach Anspruch 1, dadurch gekennzeichnet, daß der hintere Steuervorsprung von der Stirnkante (38) des Plattenmaterials (37) am umgelegten freien Schenkelende (43) der Falte (40) gebildet ist,

3. Gestell nach Anspruch 1, dadurch gekennzeichnet, daß das Innenende des Plattenmaterials (37), über die Falte hinaus, zu einer in sich ringförmig geschlossenen Schlaufe (40′) weitergefaltet ist, die als hintere Steuerkante (38′) für die Exzenterscheibe (16) fungiert,

4. Gestell nach Anspruch 3, dadurch gekennzeichnet, daß das Schlaufenende einen quer zum Plattenmaterial (37) verlaufenden Endschenkel (41) bildet, der in einen Durchbruch (33) des Halteglieds (24') hineinragt.

5. Gestell nach Anspruch 4, dadurch gekennzeichnet, daß der Durchbruch (33) zugleich zum Durchtritt des Exzenterbolzens (25) im Halteglied (24') dient und der Endschenkel (41) im wesentlichen geradlinig ausgebildet ist sowie parallel zur Drehachse (44) des Exzenterbolzens (25) verläuft.

6. Gestell nach einem oder mehreren der Ansprüche 1 bis 5, dadurch gekennzeichnet, daß in der Falte (40) bzw. Schlaufe (40') der rückgebogene Deckschenkel (43) im wesentlichen parallel zum darunterliegenden Basisschenkel (46) verläuft und der Basisschenkel (46) den vor der Falte (40) bzw. der Schlaufe (40') befindlichen Abschnitt (31) des Plattenmaterials (37) im wesentlichen eben fortsetzt.

7. Gestell nach einem oder mehreren der Ansprüche 1 bis 6, dadurch gekennzeichnet, daß der Exzenterbolzen (25) axial federbelastet (32) und bestrebt ist, einen als Drehhandhabe fungierenden Bolzenkopf (16) aus dem Gehäuse (23, 23') herauszudrücken und daß der Bolzenkopf (16) wenigstens in einer bestimmten Drehposition des Exzenterbolzens (25) gegen diese Federbelastung (32) ins Gehäuse (23, 23') eindrückbar (62) ist und, zur Montage des Verbinders (20, 20'9 im Stangen-Hohlraum (12), in eine Querbohrung (60) in der Wand der Profilstange (10) federnd einschnappt,

8. Gestell nach Anspruch 7, dadurch gekennzeichnet, daß die Federbelastung (32) auf die Exzenterscheibe (16) des Exzenterbolzens (25) ausgeübt wird.

9. Gestell nach Anspruch 8, dadurch gekennzeichnet, daß die dem Deckschenkel (43) zugekehrte Flächenseite des den Basisschenkel (46) einlagig fortsetzenden Plattenabschnitts (31) eine Anlagefläche (34) für die Exzenterscheibe (16) bildet und die Federbelastung (32) des Exzenterbolzens (25) über diesen Plattenabschnitt (31) ausgeübt wird.

10. Gestell nach Anspruch 9, dadurch gekennzeichnet, daß die Federbelastung (32) von einer Federzunge (26) ausgeht, die einstückig aus dem federelastischen Plattenmaterial (37) des Halteglieds (24, 24') geformt ist und sich an einer Gehäuseinnenfläche (30) abstützt.

11. Gestell nach einem oder mehreren der Ansprüche 1 bis 10, dadurch gekennzeichnet, daß der Bolzenkopf (15) in der die volle Ausschublage des Halteglieds (24, 24') kennzeichnenden Drehposition des Exzenterbolzens (25) zwar gegen dessen Federbelastung (32) axial ins Gehäuse (23, 23') eindrückbar (62) ist, aber in einer davon abweichenden Drehposition, vorzugsweise mindestens in seiner die volle Einschublage des Halteglieds (24, 24') bestimmenden Drehposition, gegen ein axiales Eindrücken (62) blockiert ist,

12. Gestell nach Anspruch 11, dadurch gekennzeichnet, daß die Blockade durch einen am Exzenterbolzen (25) befindlichen mitdrehbaren Radialvorsprung erzeugt ist, der an einer Anschlagfläche am Gehäuse (23, 23') anliegt, daß aber die Anschlagfläche vor der die volle Ausschublage des Halteglieds (24, 24') bestimmenden Drehposition des Radialvorsprungs endet und dadurch das axiale Eindrücken (62) des Bolzenkopfs (15) gestattet.

13. Gestell nach Anspruch 12, dadurch gekennzeichnet, daß der Radialvorsprung vom exzentrischen Bereich der Exzenterscheibe (16) erzeugt ist und die zugehörige gehäuseseitige Anschlagfläche von der Laibungsfläche eines Fensters (73) in der Gehäusewand gebildet ist und das Fenster (73) zugleich zur axialen Führung der Exzenterscheibe (16) in jenem Drehwinkelbereich des Exzenterbolzens dient, der sich an die volle Ausschublage des Halteglieds (24) anschließt,

14. Gestell nach Anspruch 12 oder 13, dadurch gekennzeichnet, daß, zusätzlich zur Exzenterscheibe (16), der Exzenterbolzen (25) an seinem dem Bolzenkopf (16) gegenüberliegenden Lagerzapfen (17) ein als Radialvorsprung fungierendes Segment besitzt und die zur Lagerung des Lagerzapfens (17) dienende Rückwand (30) des Gehäuses (23) zwar mit einem radialen Ausbruch im Lagerbereich versehen ist, der in der Drehposition des Exzenterbolzens (25), welche die volle Einschublage des Halteglieds (24) kennzeichnet, mit dem Segment axial ausgerichtet ist, aber die Rückwand (30) in allen übrigen Drehpositionen als Anschlagfläche für das Segment fungiert.

15. Gestell nach einem oder mehreren der Ansprüche 11 bis 14, dadurch gekennzeichnet, daß das Halteglied (24) zur Blockade des über die Exzenterscheibe (16) sich an ihm abstützenden Exzenterbolzens (25) gegen ein axiales Eindrücken (62) des Bolzenkopfs (16) mit einem ortsfesten Anschlag (74) im Gehäuse (23) ausgerichtet ist, wobei der Anschlag (74) so bemessen ist, daß das Halteglied (24) in seiner vollen Ausschublage frei liegt und ein axiales Eindrücken (62) des Bolzenkopfs (16) zuläßt.

16. Gestell nach Anspruch 15, dadurch gekennzeichnet, daß der Gehäuse-Anschlag (74) mit dem zur Falte (40) bzw. Schlaufe (40') rückgebogenen Innenende des Halteglieds (24, 24') zusammenwirkt,

17. Gestell nach Anspruch 16, dadurch gekennzeichnet, daß der Endschenkel (41) der Schlaufe (40') das Plattenmaterial (37) des Halteglieds (24') kreuzt und auf der gegenüberliegenden Plattenseite weiterläuft, wobei die Stirnfläche (47) des Endschenkels (41) mit dem Gehäuseanschlag (66) zusammenwirkt.

18. Gestell nach Anspruch 17, dadurch gekennzeichnet, daß der Anschlag (66) durch eine Rückwand (30) des Gehäuses (23) gebildet ist und daß - in Ausschublage des Halteglieds (24') - der Freigang des verlängerten Endschenkels (46) der Schlaufe (40') zum Eindrücken (62) des Exzenterbolzens (25) durch eine Aussparung (55) der Rückwand (30) erzeugt ist,

19. Gestell nach Anspruch 18, dadurch gekennzeichnet, daß die Aussparung aus einem Schlitz (55) in der Gehäuserückwand (30) besteht, dessen in Schubrichtung (61) des Halteglieds (24') weisende lichte Schlitzweite etwa gleich ist der Dicke (56) des Plattenmaterials (37),

20. Gestell nach einem oder mehreren der Ansprüche 1 bis 19, dadurch gekennzeichnet, daß die Vorderwand (36) des Gehäues (23) einen Ausschnitt (52) aufweist, in welchen die Falte (40) bzw. Schlaufe (40') mindestens in der Ausschublage des Halteglieds (24) einfährt und die Falte (40) bzw. Schlaufe (40') eine die Gehäusevorderwand (36) bündige Bauhöhe besitzt, die und der Innenfläche der Profilstange (10) führungswirksam anliegt,

## Claims

1. A frame structure comprising profile bars (10, 10') which can be releasably coupled together by a connector (20, 20') and of rich at least some (11) have undercut grooves (14) and others (10) have an end cavity (12) for accommodating the connector (20, 20'),

the connector (20, 20') comprises a housing (23, 23') which fits in the cavity (12), at least one holding member (24, 24') which is longitudinally displaceable (61) therein and rich is formed from plate material (37), and an eccentric pin (25) rich is rotatably mounted in the housing (23, 23') and which passes through the holding member (24, 24') and rich has an eccentric disc (16),

the holding member (24, 24') at its outward end (27) has at least one coupling hook (22, 22') which when the connector (20, 20') is fitted in position projects out of the profile bar (10) and for coupling purposes can be fitted into the groove (14) in another profile bar (11) and in the coupling situation engages behind the groove wall (68) thereof, and

the eccentric disc (16) is arranged between a front (35) and a rear control projection (38, 38') on a plate portion (31) of the holding member (24, 24') and, upon rotation of the eccentric pin (25), transfers the holding member (24, 24') with its coupling hook (22, 22') relative to the groove (14) between a coupling-releasing extension position and a coupling-effective insertion position,

characterised in that

the plate material (37) is turned over at the inward end of the holding member (24, 24') to provide a double-layer (43, 46) fold (40, 40') which is bent back towards the coupling hook (22, 22') and which forms the rear control projection (38, 38') for the eccentric disc (16).

2. A frame structure according to claim 1 characterised in that the rear control projection is formed by the end edge (38) of the plate material (37) at the turned-over free end of the limb (43) of the fold (40).

3. A frame structure according to claim 1 characterised in that the inward end of the plate material (37), beyond the fold, is further folded to provide a loop (40') which is closed in an annular configuration in itself and which acts as a rear control edge (38') for the eccentric disc (16).

4. A frame structure according to claim 3 characterised in that the loop end forms an end limb (41) which extends transversely to the plate material (37) and which extends into a through opening (33) in the holding member (24').

5. A frame structure according to claim 4 characterised in that the through opening (33) serves at the same time for the eccentric pin (25) to pass through the holding member (24') and the end limb (41) is of a substantially straight configuration and extends parallel to the axis of rotation (44) of the eccentric pin (25).

6. A frame structure according to one or characterized of claims 1 to 5 characterised in that in the fold (40) or loop (40') the bent-back cover limb (43) extends substantially parallel to the base limb (46) disposed therebeneath and the base limb (46) extends in a substantially flat configuration the portion (31) of the plate material (37), which is in front of the fold (40) or the loop (40').

7. A frame structure according to one or more of claims 1 to 6 characterised in that the eccentric pin (25) is axially spring-loaded (32) and endeavours to urge a pin head (16) acting as a rotary handle out of the housing (23, 23'), and that at least in a given rotary position of the eccentric pin (25) the pin head (16) can be pressed (62) into the housing (23, 23') against said spring loading (32) and, for fitting of the connector (20, 20') in the bar cavity (12), resiliently snaps into a transverse bore (60) in the wall of the profile bar (10).

8. A frame structure according to claim 7 characterised in that the spring loading (32) is applied to the eccentric disc (16) of the eccentric pin (25).

9. A frame structure according to claim 8 characterised in that the surface side, which is towards the cover limb (43), of the plate portion (31) which extends the base limb (46) in a single-layer configuration forms a contact surface (34) for the eccentric disc (16) and the spring loading (32) of the eccentric pin (25) is applied by way of said plate portion (31).

10. A frame structure according to claim 9 characterised in that the spring loaading (32) is produced by a spring tongue (26) which is for integrally from the resilient plate material (37) of the holding member (24, 24') and which bears against an inside surface (30) of the housing.

11. A frame structure according to one or more of claims 1 to 10 characterised in that, in the rotary position of the eccentric pin (25) which typifies the full extension position of the holding member (24, 24'), the pin head (15) can admittedly be pressed (62) axially into the housing (23, 23') against its spring loading (32) but it is blocked against being axially pressed in (62) in a rotary position which differs therefrom, preferably at least in its rotary position which determines the full insertion position of the holding member (24, 24').

12. A frame structure according to claim 11 characterised in that the blocking action is produced by a radial projection which is disposed on the eccentric pin (25) and which rotates therewith and which bears against a contact surface on the housing (23, 23'), but that the contact surface terminates before the rotary position of the radial projection which detetermines the full extension position of the holding member (24, 24') and thereby permits the pin head (15) to be axially pressed in (62).

13. A frame structure according to claim 12 characterised in that the radial projection is produced by the eccentric region of the eccentric disc (16) and the associated contact surface at the housing side is formed by the top inside surface of a window (73) in the wall of the housing and the window (73) serves at the same time for axially guiding the eccentric disc (16) in that angular region of rotary movement of the eccentric pin which adjoins the full extension position of the holding member (24).

14. A frame structure according to claim 12 or claim 13 characterised in that, in addition to the eccentric disc (16), the eccentric pin (25) , at its mounting trunnion (17) which is opposite to the pin head (16), has a segment which acts as the radial projection and the rear wall (30) of the housing (23), which serves to mount the mounting trunnion (17), is admittedly provided with a radial aperture in the mounting region which is axially aligned with the segment in the rotary position of the eccentric pin (25) which typifies the full insertion position of the holding member (24) but the rear wall (30) acts as an abutment surface for the segment in all other rotary positions.

15. A frame structure according to one or more of claims 11 to 14 characterised in that the holding member (24) is aligned with a stationary abutment (74) in the housing (23) for blocking the eccentric pin (25) which bears against the holding member by way of the eccentric disc (16) to prevent the pin head (16) from being axially pressed in (62), the abutment (74) being of such dimension that the holding member (24) is free in its full extension position and permits the pin head (16) to be axially pressed in (62).

16. A frame structure according to claim 15 characterised in that the housing abutment (74) co-operates with the inward end of the holding member (24, 24'), which is bent back to provide the fold (40) or loop (40').

17. A frame structure according to claim 16 characterised in that the end limb (41) of the loop (40') crosses the plate material (37) of the holding member (24') and continues on the opposite side of the plate, the end face (47) of the end limb (41) co-operating with the housing abutment (66).

18. A frame structure according to claim 17 characterised in that the abutment (66) is formed by a rear wall (30) of the housing (23) and that - in the extension position of the holding member (24′) - free movement of the extended end limb (46) of the loop (40′) for pressing in (62) the eccentric pin (25) is afforded by an aperture (55) in the rear wall (30).

19. A frame structure according to claim 18 characterised in that the aperture comprises a slot (55) in the rear wall (30) of the housing, the internal width of the slot, in the direction of sliding movement (61) of the holding member (24′), being approximately equal to the thickness (56) of the plate material (37).

20. A frame structure according to one or more of claims 1 to 19 characterised in that the front wall (36) of the housing (23) has a cut-out (52) into which the fold (40) or loop (40′) moves at least in the extension position of the holding member (24) and the fold (40) or loop (40′) is of a structural height which is flush with the front wall (36) of the housing which bears against the inside surface of the profile bar (10) to provide a guidance effect.

**Revendications**

1. Echafaudage formé de barres profilées (10, 10′) qui sont agencées de façon à pouvoir être accouplées entre elles au moyen d'un dispositif de liaison (20, 20′) et dont au moins certaines (11) comportent des rainures (14) présentant des parties en contre-dépouille et d'autres (10) comprennent une cavité (12) d'extrémité frontale servant à recevoir le dispositif de liaison (20, 20′), dans lequel :
    - le dispositif de liaison (20, 20′) est constitué d'un boîtier (23, 23′) s'emboîtant dans la cavité (12), d'au moins un organe de maintien (24, 24′), mobile en translation longitudinale (61) dans ce boîtier et formé d'un matériau en plaque (37), ainsi que d'un verrou à excentrique (25) qui est monté rotatif dans le boîtier (23, 23′) et qui traverse l'organe de maintien (24, 24′) et comporte un disque excentré (16),
    - à son extrémité extérieure (27), l'organe de maintien (24, 24′) comporte au moins un crochet d'accouplement (22, 22′) qui fait saillie hors de la barre profilée (10) lorsque le dispositif de liaison (20, 20′) est monté et qui est agencé de façon à pouvoir être emboîté en vue de son accouplement dans la rainure (14) d'une autre tige profilée (11) et vient en prise derrière une paroi (68) de cette rainure (14) dans la situation d'accouplement et
    - le disque excentré (16) est disposé sur une section de plaque (31) de l'organe de maintien (24, 24′) entre une saillie avant de commande (35) et une saillie arrière de commande (38, 38′), tandis que, lorsqu'on fait tourner le verrou à excentrique (25), l'organe de maintien (24, 24′) se déplace, par son crochet d'accouplement (22, 22′) et vis-à-vis de la rainure (14), entre une position déployée de désaccouplement et une position rétractée d'accouplement, caractérisé en ce que :
    - à l'extrémité intérieure de l'organe de maintien (24, 24′), le matériau en plaque (37) est plié sur lui-même de façon à former une partie pliée (40, 40′), à deux couches (43, 46), qui revient vers le crochet d'accouplement (22, 22′) et qui constitue la saillie arrière de commande (38, 38′) associée au disque excentré (16).

2. Echafaudage suivant la revendication 1, caractérisé en ce que la saillie arrière de commande est constituée par la rive (38) du matériau en plaque (37) se présentant sur l'aile d'extrémité libre et repliée (43) de la partie pliée (40).

3. Echafaudage suivant la revendication 1, caractérisé en ce qu'au-delà de la partie pliée, l'extrémité intérieure du matériau en plaque (37) est encore pliée de façon à former une boucle (40′) fermée en anneau qui joue le rôle de saillie arrière de commande (38′) associée au disque excentré (16).

4. Echafaudage suivant la revendication 3, caractérisé en ce que l'extrémité de la boucle constitue une aile d'extrémité (41) s'étendant perpendiculairement au matériau en plaque (37) et traversant une découpe (33) de l'organe de maintien (24′).

5. Echafaudage suivant la revendication 4, caractérisé en ce que la découpe (33) sert en même temps à laisser passer le verrou à excentrée (25) à travers l'organe de maintien (24′) et en ce que l'aile d'extrémité (41) s'étend d'une manière pratiquement rectiligne et parllèle à l'axe de rotation (44) du verrou à excentrique (25).

6. Echafaudage suivant une ou plusieurs des revendications 1 à 5, caractérisé en ce que, dans la partie pliée (40) ou la boucle (40′), l'aile de recouvrement (43) revenant en arrière s'étend d'une manière pratiquement parallèle à l'aile de base (46) située au-dessous et en ce que cette aile de base (46) s'étend pratiquement dans le plan de la section (31) du matériau en plaque (37) qui est située devant la partie pliée (40) ou la boucle (40′).

7. Echafaudage suivant une ou plusieurs des revendications 1 à 6, caractérisé en ce que le verrou à excentrique (25) est soumis à une sollicitation élastique axiale (32) et tend à repousser hors du boîtier (23, 23') une tête de verrou (16) jouant le rôle d'élément rotatif de manoeuvre et en ce qu'au moins dans une position angulaire déterminée du verrou excentrique (25), la tête de verrou (16) peut être enfoncée (62) dans le boîtier (23, 23') à l'encontre de cette sollicitation élastique (32) et peut s'enclencher élastiquement dans un perçage transversal (60) de la paroi de la barre profilée (10) en vue du montage du dispositif de liaison (20, 20') dans la cavité (12) de la barre.

8. Echafaudage suivant la revendication 7, caractérisé en ce que la sollicitation élastique (32) s'exerce sur le disque excentré (16) du verrou à excentrique (25).

9. Echafaudage suivant la revendication 8, caractérisé en ce que la face, tournée vers l'aile de recouvrement (43), de la section de plaque (31) qui prolonge l'aile de base (46) en une seule couche constitue une surface d'appui (34) pour le disque excentré (16) et en ce que la sollicitation élastique (32) s'exerce sur le verrou à excentrique (25) par l'intermédiaire de cette section de plaque (31).

10. Echafaudage suivant la revendication 9, caractérisé en ce que la sollicitation élastique (32) provient d'une languette élastique (26) qui est formée d'une pièce dans le matériau en plaque (37), à élasticité du type ressort, de l'organe de maintien (24, 24') et qui prend appui sur une surface intérieure (30) du boîtier.

11. Echafaudage suivant une ou plusieurs des revendications 1 à 10, caractérisé en ce que, bien que, dans la position angulaire du verrou à excentrique (25) qui détermine la position totalement déployée de l'organe de maintien (24, 24'), la tête de verrou (15) puisse être enfoncée axialement (62) dans le boîtier (23, 23') à l'encontre de la sollicitation élastique (32) s'exerçant sur ce verrou, cette tête de verrou (15) est immobilisée de façon à ne pas pouvoir être enfoncée axialement (62) lorsque le verrou à excentrique (25) est dans une position angulaire s'écartant de la susdite position, de préférence au moins dans sa position angulaire qui détermine la position totalement rétractée de l'organe de maintien (24, 24').

12. Echafaudage suivant la revendication 11, caractérisé en ce que l'immobilisation est réalisée au moyen d'une saillie radiale qui est située sur le verrou à excentrique (25) de façon à être entraînée en rotation avec ce dernier et qui prend appui sur une surface de butée située sur le boîtier (23, 23'), mais en ce que cette surface de butée s'interrompt avant la position angulaire de la saillie radiale qui détermine la position totalement déployée de l'organe de maintien (24, 24'), et permet ainsi un enfoncement axial (62) de la tête de verrou (15).

13. Echafaudage suivant la revendication 12, caractérisé en ce que la saillie radiale est constituée par la partie excentrée du disque excentré (16) et la surface d'appui associée sur le boîtier est constituée par la surface périphérique d'une fenêtre (73) ménagée dans la paroi du boîtier et en ce que la fenêtre (73) sert en même temps à guider axialement le disque excentré (16) dans la zone angulaire de rotation du verrou à excentrique qui prolonge la position totalement déployée de l'organe de maintien (24).

14. Echafaudage suivant la revendication 12 ou 13, caractérisé en ce qu'en plus du disque excentré (16), le verrou excentrique (25) comporte, sur son tourillon (17) opposé à la tête de verrou (16), un segment jouant le rôle de saillie radiale et en ce que, bien que la paroi arrière (30) du boîtier (23) qui sert au montage à palier du tourillon (17) soit pourvue, dans la zone du palier, d'une découpe radiale qui est située dans l'alignement axial du segment lorsque le verrou à excentrique (25) est dans la position angulaire qui détermine la position totalement rétractée de l'organe de maintien (24), cette paroi arrière (30) joue toutefois le rôle de surface d'appui du segment dans toutes les autres positions angulaires.

15. Echafaudage suivant une ou plusieurs des revendications 11 à 14, caractérisé en ce qu'en vue d'immobiliser le verrou à excentrique (25), prenant appui sur l'organe de maintien (24) par l'intermédiaire du disque excentré (16), l'organe de maintien (24) est orienté dans le boîtier (23) par une butée fixe (74) de façon à empêcher un enfoncement axial (62) de la tête de verrou (16), les dimensions de la butée (74) étant telles que l'organe de maintien (24) soit disposé librement dans sa position complètement déployée et permettre un enfoncement axial (62) de la tête de verrou (16).

16. Echafaudage suivant la revendication 15, caractérisé en ce que la butée (74) du boîtier coopère avec l'extrémité intérieure de l'organe de maintien (24, 24') qui est repliée de façon à former la partie pliée (40) ou la boucle (40').

17. Echafaudage suivant la revendication 16, caractérisé en ce que l'aile d'extrémité (41) de la boucle (40′) croise le matériau en plaque (37) de l'organe de maintien (24′) et se poursuit sur le côté opposé du matériau en claque, la rive (47) de l'aile d'extrémité (41) coopérant avec la butée (66) du boîtier.

18. Echafaudage suivant la revendication 17, caractérisé en ce que la butée (66) est formée par une paroi arrière (30) du boîtier (23) et en ce que, dans la position déployée de l'organe de maintien (24′), l'accès à l'aile d'extrémité (46), prolongée, de la boucle (40′) en vue de permettre l'enfoncement (62) du verrou à excentrique (25) est assuré au moyen d'un évidement (55) ménagé dans la paroi arrière (30).

19. Echafaudage suivant la revendication 18, caractérisé en ce que l'évidement est formé par une fente (55) qui est ménagée dans la paroi arrière (30) du boîtier et dont la largeur de l'ouverture dans la direction (61) de déplacement de l'organe de maintien (24′) est à peu près égale à l'épaisseur (56) du matériau en plaque (37).

20. Echafaudage suivant une ou plusieurs des revendications 1 à 19, caractérisé en ce que la paroi avant (36) du boîtier (23) comporte une découpe (52) dans laquelle la partie pliée (40) ou la boucle (40′) pénètre au moins dans la position déployée de l'organe de maintien (24) et en ce que la partie pliée (40) ou la boucle (40′) possède une épaisseur lui faisant affleurer le niveau de la paroi avant (36) du boîtier qui est en appui, en vue de son guidage, sur la surface intérieure de la barre profilée (10).

FIG1A

FIG. 1B

FIG2D

*FIG.2A*

*FIG.2B*

*FIG.2C*

EP 0 412 339 B1

EP 0 412 339 B1

*FIG. 3*

*FIG. 4*

FIG. 5

FIG. 6

FIG. 7

FIG. 8

FIG. 9

# FIG. 10

# FIG. 11

FIG. 12

FIG. 13

EP 0 412 339 B1